# EUROPÄISCHE PATENTSCHRIFT

(11) **EP 1 832 245 B1**
(45) Veröffentlichungstag und Bekanntmachung des Hinweises auf die Patenterteilung: **09.03.2011**
(21) Anmeldenummer: 07004836.8
(22) Anmeldetag: 08.03.2007
(51) Int. Cl.: A61C 13/00, A61F 2/50

(54) **Herstellung von Zahnersatz**
Manufacture of dental prostheses
Fabrication de prothèse dentaire

(30) Priorität: 08.03.2006 DE 102006010665
(43) Veröffentlichungstag der Anmeldung: 12.09.2007
(73) Patentinhaber: Dentales Service Zentrum GmbH & Co. KG, 37434 Gleboldehausen (DE); Gerd Uferkamp Dental GmbH, 45468 Mühlheim (DE)
(72) Erfinder: Hoffmann, Andreas, 37434 Gieboldehausen (DE); Uferkamp, Tim, 45468 Mühlheim (DE)
(74) Vertreter: Rehberg Hüppe + Partner

(56) Entgegenhaltungen:
- EP-A1- 0 054 785
- EP-A1- 0 091 876
- WO-A-02/09612
- WO-A-90/13268
- WO-A-91/07141
- DE-A1- 4 020 433
- DE-A1- 4 025 728
- DE-A1- 19 804 921
- US-B1- 6 599 125

## Beschreibung

### TECHNISCHES GEBIET DER ERFINDUNG

Die Erfindung bezieht sich auf ein Verfahren und eine Vorrichtung zur Herstellung von Zahnersatz. Dabei sind unter Zahnersatz Zahnprothesen zu verstehen, die einen Schleimhautbereich und einen daran angrenzenden Zahnbereich aufweisen. Der Schleimhautbereich dient zur Abstützung und Anlagerung der Zahnprothese an einem zahnfreien Bereich eines Unterkiefers oder Oberkiefers, während der Zahnbereich die fehlenden Zähen des jeweiligen Kiefers ersetzt. Eine Zahnprothese kann einen Teil der Zähne eines Unterkiefers oder Oberkiefers oder alle Zähne eines Kiefers ersetzen.

EP 0 091 876 offenbart ein Verfahren zur Herstellung von Zahnersatz.

### STAND DER TECHNIK

Der übliche Weg, Zahnersatz herzustellen besteht darin, von dem betroffenen und dem gegenüberliegenden Kiefer des jeweiligen Patienten einen oder mehrere Abdrücke zu nehmen und auf Basis dieser Abdrücke ein Modell herzustellen. Das Modell ist dann die Grundlage für die Ausbildung der Zahnprothese und zwar sowohl, um den Schleimhautbereich der Zahnprothese an den zahnfreien Bereich des jeweiligen Kiefers, als auch, um den Zahnbereich an Zähne des jeweils gegerioberliegenden Kiefers und ggf. an angrenzende Zähne des Klefers, für den die Zahnprothese vorgesehen ist, anzupassen. Für die Ausbildung des Zahnbereichs können konfektionierte computergefräste keramische Prothesenzähne verwendet werden, die bei einer Totalprothese, also einem Zahnersatz sowohl für den Unterkiefer als auch den Oberkiefer eine perfekte Grundlage für eine Verzahnung untereinander bieten. Bei Teilprothesen sind diese Vorteile des Einsatzes fertiger Prothesenzähne jedoch kaum nutzbar, weil diese nicht an die im Mund noch vorhandenen Zähne angepasst sind. Entsprechend müssen die Zähne nötigenfalls Individuell von Hand hergestellt werden, Das bekannte Verfahren ist insgesamt sehr arbeits- und zeitaufwendig und entsprechend mit relativ hohen Kosten verbunden. Es lässt sich allenfalls in Teilen automatisieren.

Für die dreidimensionale Navigation von in einem Kiefer zu verankernden Implantaten ist es bekannt, eine Computertomographie des Schädels durchzuführen, zu dem der betroffene Kiefer gehört. Die dabei zu der Raumform des Kiefers gewonnenen Daten werden für die Planung und die Konzeption eines Bohrschemas für die Implantation eines Zahn implantats dreidimensional visualisiert.

Für die Herstellung von Zahninlays ist es bekannt, die Kavität in einem Zahn optisch mit einer Abtestelnrlchtung abzutasten und einen die Raumform der Kavität beschreibenden Datensatz zu gewinnen, Gleichzeitig kann dabei die Raumform der angrenzenden Zahnoberflächen erfasst werden. Aus den derart gewonnen Datensätzen wird mit Hilffe eines Rechners ein . Datensatz ermittelt, der die Raumform eines in die Kavität passenden Inlays beschreibt. Anschließend wird der die Raumform des Inlays beschreibende Datensatz zusammen mit den Datensätzen der durch Abtasten erfassten Raumformen auf einem Bildschirm dreidimensional angezeigt, um es einem Zahnarzt zu erlauben, die von dem Rechner automatisch als geeignet ermittelte Raumform einer Außenfläche des Inlays zu überarbeiten, Anschließend wird mit dem derart gewonnenen Datensatz eine Maschine zum Material abnehmenden Herausarbeiten der Raumform des Inlays aus einem Karamikkörper angesteuert Das Inlay wird anschließend In die Kavität des jeweiligen Zahn einzementiert. Der Keramikkörper kann bezüglich seiner Farbe auf die Farbe des Zahns, In den das Inlay einzementiert werden soll, ausgewählt werden.

### AUFGABE DER ERFINDUNG

Der Erfindung liegt die Aufgabe zugrunde, ein Verfahren und eine Vorrichtung zur Herstellung von Zahnersatz aufzuzeigen, die die kostengünstige Herstellung von Individuellen Zahnprothesen ermöglichen.

### LÖSUNG

Die Aufgabe der Erfindung wird durch ein Verfahren mit den Merkmalen des unabhängigen Patentanspruchs 1 und eine Vorrichtung mit den Merkmalen des unabhängigen Patentanspruchs 11 gelöst. Bevorzugte Ausführungafiorm des neuen Verfahrens sind in den Unteransprüchen 2 bis 9 beschrieben. Der Patentanspruch 10 betrifft die Verwendung eines Kunatstoffvortormlings bei dem neuen Verfahren. Bevorzugte Ausführungsform der neuen Vorrichtung sind in den Unteransprüchen 11 bis 13 beschrieben. Der nebengeordnete Patentanspruch 14 beschreibt zusätzlich ein dem neuen Verfahren zur Herstellung von Zahnersatz im Wesentlichen entsprechendes neues Verfahren zur Herstellung von Epithetik. Der Patentanspruch 15 beschreibt entsprechend eine der neuen Vorrichtung zur Herstellung von Zahnersatz Im Wesentlichen entsprechende neue Vorrichtung zur Herstellung von Epithetik

### BESCHREIBUNG DER ERFINDUNG

Bei der neuen Herstellung von Zahnersatz wird die Nahme von Abdrücken durch ein mechanisches und/oder optisches Abtasten einer Schleimheutstruktur In einem zahnfreien Bereich eines Unterkiefers oder Oberkiefers ersetzt, um auf diese Weise direkt einen die Raumform der Schlalmhautstruktur beschreibenden Datensatz zu ermitteln, Dabei können grundsätzlich dieselben Algorithmen zur Anwendung kommen, wie sie schon bislang zum optischen Abtasten einer Kavität in einem Zahn für die Herstellung eines lays angewendet wurden. Es ist aber auch möglich, die Schleirnhautstruktur in den zahnfreien Bereich mechanisch abzutasten, um den die Raumform der Schleimhautstruktur' beschreibenden Datensatz zu ermitteln, beispielsweise mit einer Kontaktsonde. Welches genaue Abtastverfahren angewandt wird, beispielsweise auch, welche genaue optische Technik, ist unerheblich. So können zum Beispiel dreidimensionale Aufnahmetechniken, bei denen die interessierende Raumform aus mehreren Richtungen aufgezeichnet wird, und optische Abtastverfahren, die Punkt- oder Streifenlicht verwenden, eingesetzt werden. Im letzteren Fall spricht man zum Beispiel von so genannter Lichtschnittabtastung,

Der die Raumform der Schleirnhautatruktur beschreibende Datensatz wird bei der Erfindung dazu verwendet, einen die Raumform einer herausnehmbaren Zahnprothese beschreibenden Datensatz zu ermitteln. Dabei hat die Raumform der Zahnprothese einen zu der Raumform der Schleirnhautstruktur komplementären Schlelmhautbereich und einen daran angrenzenden Zahnbereich. Die Raumform des dem jeweiligen Kiefer zugewandten Schleimheutberelchs kann in erster Näherung dieselbe Raumform, d. h. denselben Oberflächenverlauf, wenn auch mit anderen Vorzeichen, aufweisen wie die Schleimhautstruktur, an der er bei der Verwendung der Zahnprothese zur Anlage kommen soll. Der an den Schleimhauthereich angrenzende Zahnbereich kann unter Verwendung zusätzlicher Daten automatisch erzeugt oder von einem Ausführenden des neuen Verfahrens individuell gestaltet werden.

In dem bereits abschließenden Schritt des neuen Verfahrens wird mit dem derart gewonnenen Datensatz, der die Raumform der Zahnprothese beschreibt, eine Maschine zum Material abnehmenden Herausarbeiten der Raumform der Zahnprothese aus einem Kunstatoffvorformiing angesteuert. Der Kunatstoffvorformling weist dabei einen Bereich aus einer ersten und einen daran angrenzenden Bereich aus einer zweiten Farbe auf. Die beiden Farben sind darauf abgestimmt, dass der Schleimhautbereich der Raumform des Zahnersatzes in dem Bereich des Kunststoffvorformlinga aus der ersten und der Zahnbereich in dem Bereich des Kunststoffvorformlings aus der zweiten Farbe ausgebildet wird. Das heißt, die erste Farbe ist in der Regel ein Rosaton, während die zweite Farbe ein weißgelber Farbton ist. Zur Anpassung an individuelle Eigenarten können Kunstatoffvorformlinge mit unterschiedlichen Rosa- und weißgelben Farbtönen zur Auswahl gestellt werden. Die Größe des Kunstatoffvorformlings kann zur Vermeidung eines unnötigem Bearbeitungsaufwands hinsichtlich seiner Form und Größe auf die Raumform der Zahnprothese abgestimmt ausgewählt werden. Auch hierfür kann eine Mehrzahl von Kunstatoffvorformllngen zur Auswahl stehen, Das Material abnehmende Herausarbeiten kann beispielsweise durch Schleifen und/oder Fräsen des Kunststoffvortonmlings erfolgen. Es kann auch zunächst ein Frässchritt durchgeführt werden, dem dann ein Schleifschritt zur Endbearbeitung folgt. Hieran kann sich entweder bereits in der Maschine oder manuell ein Pollerschritt anschließen. Die Zahnprothese wird aber in jedem Fall von der Maschine im Wesentlichen fertig gestellt. Trotz Ausbildung der neuen Zahnprothese ausschließlich aus Kunststoff kann diese für eine lang andauernde Verwendung hinreichend stabil sein. Im Übrigen ist es mit dem neuen Verfahren problemlos und mit geringem Aufwand möglich, entweder sofort oder nach gewisser Zeit ein Doppel einer Zahnprothese anzufertigen, um einen Ersatz zu haben, solite die zunächst hergestellte Zahnprothese ausfallen. Bei Verwendung beispielsweise verstärkter Kunststoffe für den Kunststoffvorformling ist ein solcher Ausfall beispielsweise durch Zerbrechen der Zahnprothese jedoch relativ unwahrscheinlich. Er ist sogar unwahrscheinlichar als bei einer nach einem herkömmlichen Verfahren hergestellten Zahnprothese, da die neue Zahnprothese auf einem durchgängig zusammenhängenden Kunstoffvorformling aufbaut.

Wenn bei dem neuen Verfahren zusätzlich die Raumform von an den zahnfreien Bereich angrenzenden Zähnen des Unterkiefers oder Oberkiefers abgetastet und der die Raumform der Zahnprothese beschreibende Datensatz unter zusätzlicher Berücksichtigung der Raumform der angrenzenden Zähne ermittelt wird, kann der Prozess der Anpassung des die Raumform der Zahnprothese beschreibenden Datensatzes an noch vorhandene Zähne des jeweiligen Kiefers weitgehend automatisiert werden.

Entsprechendes gilt für die Anpassung der Zahnprothese an noch vorhandene Zähne des gegenübeniogenden Kiefers. Zu diesem Zweck ist zusätzlich die Raumform eines Bereichs eines Kiefers, der dem zahnfreien Bereich des Unterkiefers oder Oberkiefers gegenüberliegt, abzutasten, und der die Raumform der Zahnprothese beschreibende Datensatz Ist unter Berückslchtlgung der Raumform des Bereichs des gegenüberliegenden Kiefers zu ermitteln.

Weiterhin kann auch eine Relativiage eines Kiefers, der dem zahnfreien Bereich des Unterkiefers oder Oberkiefers gegenüberliegt, abgetastet werden, um diese Relativlage des gegenüberliegenden Kiefers bei der Ermittlung des die Raumform der Zahnprothese beschreibenden Datensatzes zu verwenden. So kann automatisch eine Raumform für die Zahnprothese ermittelt werden, die eine Verzahnung mit den noch vorhandenen Zähnen des gegenüberliegenden Kiefers sicherstelit.

Eine noch perfektere automatische Anpassung der Zahnprothese an die individuellen Gegebenheiten kann dann erreicht werden, wenn die Relativlage des gegenüberliegenden Kiefers In verschiedenen Stellungen der Kiefer zueinander abgetastet wird. So können beispielsweise Rillen In den Kauflächen auf die möglichen Relativlagen der Kiefer zueinander abgestimmt werden.

Konkret kann der die Raumform der Zahnprothese beschreibende Datensatz unter Berückelchtigung einer Okklusionsebene und/oder einer Okklusionsrichtung zwischen den aneinander gegenüberliegenden Kiefern ermittelt worden,

Da eine Schleimhaut, auch wenn sie einen Kieferknochen nur In einer dünnen Schicht bedeckt, weder starr ist, noch eine uniforme Dicke, noch uniforme Verformungseigenschaften aufweist, ist es bei dem neuen Verfahren bevorzugt, wenn die Schleirnhautstruktur in dem zahnfreien Bereich des Unterkiefers oder Oberkiefers in verschiedenen Mundsituationen abgetastet wird, um den die Raumform der Schleirnhautstruktur beschreibenden Datensatz zu ermitteln. Diese verschiedenen Mundsituationen können beispielsweise durch Blasen, Saugen und/oder durch Muskeiruhe von bzw, bei dem jeweiligen Patienten eingestellt werden. Sich dabei verändernde Raumformen der Schleirnhautstruktur geben wichtige Hinweise auf die lokale Dicke und Verformbarkeit der Schleimhaut.

Obwohl dies bei dem neuen Verfahren insbesondere dann, wenn umfassende Datensätze durch Abtasten im Mundraum gewonnen werden, nicht unbedingt erforderlich ist, kann der die Raumform der Schleirnhautstruktur beschreibende Datensatz zusammen mit den durch Abtasten ermittelten Datensätzen in einer dreidimensionalen Darstellung visualisiert werden, bevor die Maschine angesteuert wird. Dies erlaubt eine Kontrolle der für die Zahnprothese automatisch ermittelten Raumform. Mit einer dreidimensionalen Darstellung zur Visualisierung ist hier im Regelfall keine holographische Darstellung, sondern die Wiedergabe einer perspektivischen Ansicht mit veränderbarer Blickrichtung gemeint, die auch bei Darstellung auf einem zweidimensionalen Bildschirm einen dreidimensionalen Eindruck vermittelt.

Besonders bevorzugt ist es bei dem neuen Verfahren, wenn der die Raumform der Sehlelmhautstruktur beschreibende Datensatz durch an dieser dreidimensionalen Darstellung angreifende graphische Werkzeuge veränderbar ist. Der das neue Verfahren durchführende kann dann an der dreidimensionalen Darstellung Veränderungen vornehmen, um die Raumform der,Zahnprothese zu, optimieren, die sich automatisch auf den Datensatz der Zahnprothese auswirken, der anschließend zur Ansteuerung der Maschine zum Herausarbeiten der Zahnprothese aus dem Kunstatoffvorformllng verwendet wird.

Das neue Verfahren eignet sich nicht nur unmittelbar zur Herstellung von Zahnersatz. Es ist grundsätzlich auch zur Herstellung von Epithetik für den Mund und Gesichtsbereich geeignet. Bei dieser Sonderanwendung des neuen Verfahrens umfasst dieses die Schritte: mechanisches und/oder optisches Abtasten einer Oberflächenstruktur in einem Bereich eines Kopfs, um einen die Raumform der Oberflächenstruktur beschreibenden Datensatz zu ermitteln; Ermitteln eines die Raumform einer Epithese oder eines Opturators beschreibenden Datensatzes, wobei die Raumform der Epithese oder des Opturators einen zu der Raumform der Oberflächenstruktur komplementären Anlagebereich und diesem abgekehrte Bereichs aufweist; und Ansteuern einer Maschine mit dem die Raumform der Epithese oder des Opturators beschreibenden Datensatz zum Material abnehmenden Herausarbeiten der Raumform der Epithese oder des Opturators aus einem Kunststoffvorformiling, der einen Bereich aus einem ersten und ein daran angrenzenden Bereich aus einem zweiten Material aufweist, wobei sich die Verformbarkeit und/oder die Farbe des ersten und des zweiten Materials voneinander unterscheiden. So kann das eine Material beispielsweise hart sein, um einen fehlenden Knochenbereich zu ersetzen, während das andere Material weich ist, um über der ersetzten Knochenstruktur liegendes weiches Gewebe zu ersetzen.

Vorteilhafte Weiterblidungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen, Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen Die. Kombination von Merkmalen unterschiedlicher Ausführungsformen der Erfindung oder von Merkmalen unterschiedlicher Patentansprüche ist ebenfalls abweichend von den gewählten Rückbezlehungen der Patentansprüche möglich und wird hiermit angeregt. Dies betrifft auch solche Merkmale, die In separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Ablaufschaubild, das die Durchführung des neuen Verfahrens zur Herstellung von Zahnersatz mit der neuen Vorrichtung skizziert; und
- **Fig. 2**: zeigt einen Kunatstoffvorformthg, wie er bei dem neuen Verfahren verwendet wird.

### FIGUREWBESCHREIBUNG

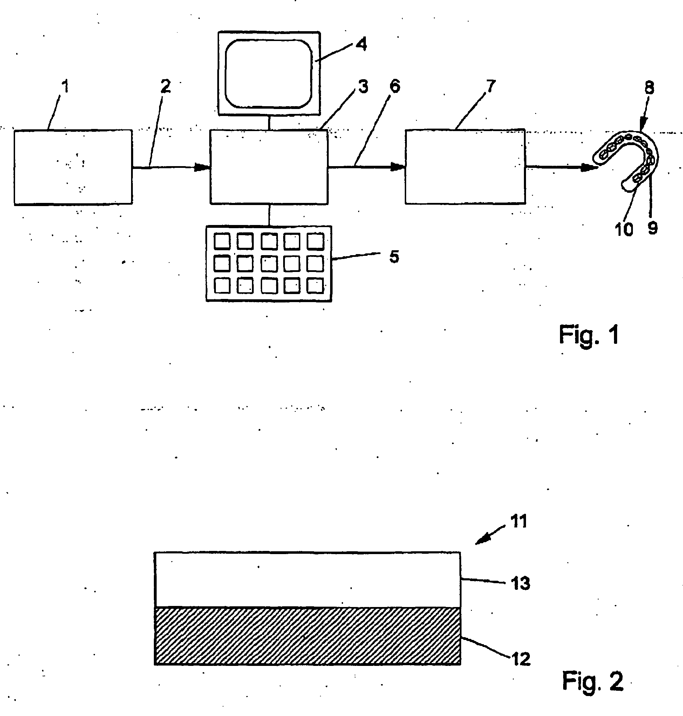

Das in **Fig. 1** anhand der dabei verwendeten neuen Vorrichtung skizzierte neue Verfahren zur Herstellung von Zahnersatz beginnt mit dem Schritt des Abtastens, in dem von einer Abtasteinrichtung 1 durch mechanisches und/oder optisches Abtasten zumindest einer Schleirnhautstruktur in einem zahnfreien Bereich eines Unterkiefers oder Oberkiefers ein die Raumform der Schleirnhautstruktur beschreibender Datensatz ermittelt wird. Zusätzlich können die Raumformen von an den zahnfreien, Bereich angrenzenden Zähnen des Unterkiefers oder Oberkiefers oder ein Bereich eines Kiefers, der dem zahnfreien Bereich des Unterkiefers oder Oberkiefers gegenüberliegt, abgetastet werden. Auch die Relativlage des gegenüberliegenden Kiefers relativ zu dem Unterkiefer oder Oberkiefer mit dem zahnfreien Bereich kann bestimmt werden. Vorzugsweise wird zumindest die Schleirnhautstruktur in dem zahnfreien Bereich des Unterkiefers oder Oberklafers In verschiedenen Mundsituationen abgetastet, die beispielsweise durch Saugen, Blasen oder Muskeiruhe von bzw. bei dem jeweiligen Patenten hervorgerufen werden. Das Abtasten kann durch verschiedenste als solche gängige optische Verfahren zum Erfassen dreidimensionaler Strukturen erfolgen. Es kann auch eine mechanische Abtastung erfolgen. In aller Regel wird es sich um ein abrasterndes Abtasten mit einer optischen oder mechanischen Sonde handeln, die die Raumform der Schleimheutstruktur punkt- oder linienweise erfasst.

Von der Abtasteinrichtung 1 wird der die Raumform der Schleirnhautstruktur beschreibende Datensatz 2 an einen Rechner 3 übergeben, der mit einem Bildschirm 4 und einer Eingabeeinrichtung 5 versehen ist. Der Rechner 3 berechnet mit einer hierfür ausgelegten Software aus dem Datensatz 2 einen Datensatz 6, der die Raumform einer herausnehmbaren Zahnprothese 8 zum Auffüllen des zahnfreien Bereichs des Unterkiefers oder Oberkiefers beschreibt. Dann wird dieser Datensatz 6 zusammen mit dem Datensatz 2, der die Raumform der Schleirnhautstruktur beschreibt, auf einem Bildschirm 4 In einer dreidimensionalen Darstellung angezeigt. Dabei bedeutet dreidimensionale Darstellung, dass die jeweiligen Raumfonnen unter wählbarer Blickrichtung mit dem Verlauf ihrer Begrenzungslinien im Raum dargestellt werden. Über die Eingabeeinrichtung 5, die nicht nur wie hier dargestellt eine Tastatur sondern auch beispielsweise eine Maus umfassen kann, kann die Raumform der Zahnprothese 8 auf dem Bildschirm 4 manipuliert werden. Damit erfolgt gleichzeitig eine Manipulation des zugehörigen Datensatzes 6. So kann ein das neue Verfahren Durchführender In die Ermittlung der Raumform der Zahnprothese 8 eingreifen. Der die Raumform der Zahnprothese 8 beschreibende Datensatz 6 wird dann an eine Maschine 7 übermittelt, die aus einem Kunststoffvorformling, der näher im Zusammenhang mit Fig. 2 beschrieben werden wird, Material abnehmend die Zahnprothese 8 herausarbeitet. Dabei weist die Zahnprothese 8 einen Schleimhautbereich 9 und einen Zahnbereich 10 auf, die aus Bereichen des Kunststoffvortormlings mit unterschiedlicher Farbe herausgearbeitet werden.

**Fig. 2** skizziert den Vorformling 11, der einen rosafarbenen Bereich 12 zur Ausbildung des Schleimhautbereichs und einen weißgelben Bereich 13 zur Ausbildung des Zahnbereichs 10 der Zahnprothese 8 aufweist. Dabei besteht der Vorformling 11 vorzugsweise durchgängig aus Kunststoff derselben Zusammensetzung, die in den Bereichen 12 und 13 unterschiedlich eingefärbt ist, die aber über die Grenze zwischen den Bereichen 12 und 13 geschlossen zusammenhängt. Die Raumform des Vorformlings 11 kann an die Zahnprothese 8 angepasst sein, um möglichst wenig Material von dem Vorformling abnehmen zu müssen, Die Farben der Bereiche 12 und 13 können ebenfalls in Abhängigkeit von den Gegebenheiten bei dem einzelnen Patienten individuell ausgewählt werden, indem eine Mehrzahl von Vorformlingen 11 mit verschiedenen Farben und verschiedenen Farbkombinationen angeboten wird.

### BEZUGSZEICHENLISTE

- 1: Abtestainrlchtung
- 2: Datensatz
- 3: Rechner
- 4: Bildschirm
- 5: Eingabeeinrichtung
- 6: Datensatz
- 7: Maschine
- 8: Zahnprothese
- 9: Schleimhautbereich
- 10: Zahnbereich
- 11: Vorformling
- 12: Bereich
- 13: Bereich

## Patentansprüche

1. Verfahren zur Herstellung von Zahnersatz mit den Schritten:
- mechanisches und/oder optisches Abtasten einer Schleimhautstruktur In einem zahnfreien Bereich eines Unterklefers oder Oberkiefers, um einen die Raumform der Schleimhautstruktur beschreibenden Datensetz (2) zu ermltteln,
- Ermitteln eines die Raumform einer herausnehmbaren Zahnprothese (8) beschreibenden Datensatzes (8), wobei die Raumform der Zahnprothese (8) einen zu der Raumform der Schieimhautstruktur komplementären Schleimhautbereich (9) und einen daran angranzenden Zahnbereich (10) aufweist, und
- Ansteuern einer Maschine (7) mit dem die Raumform der Zahnprothese beschreibenden Datensatz (6) zum Material abnehmenden Herausarbeiten der Raumkorm der Zahnprothese (8) aus einem Kunstetoffvorformling (11), der einen Bereich (12) aus einer ersten und einen daran angrenzenden Bereich (13) aue einer zwelten Farbe aufweist, wobei der Schlelmheutbereich (9) der Raumform der Zahnprothese in dem Bereich (12) des Kunststoffvorformlings (11) aus der ersten und deren Zahnbereich (10) In dem Bereich (13) des Kunststoffvorformlings (11) aus der zwelten Farbe ausgebildet wird.

2. Verfahren nach Anspruch 1, **dadurch gekennzeichnet, dass** zusätzlich die Raumform von an den zahnfreien Bereich angrenzenden Zähnen das Unterklefers oder Oberkiefers abgetastet und der die Raumform der Zahnprothese (8) beschreibende Detensetz (6) unter BerOcksichtigung der Raumform der angrenzenden Zähne ermittelt wird.

3. Verfahren nach Anspruch 1 oder 2, **dadurch gekennzeichnet, dass** zusätzlich die Raumform eines Bereichs eines Kiefers, der dem zahnfreien Bereich des Unterklefers oder Oberkiefers gegenüber liegt, abgetastet und der die Raumform der Zahnprothese (8) beschreibende Datensatz (6) unter Berücksichtigung der Raumform des Bereichs des gegenüberliegenden Klefers ermittelt wird.

4. Verfahren nach einem der Ansprüche 1 bis 3, **dadurch gekennzeichnet, dass** zusätzlich eine Relativlage eines Klefers, der dem zahnfreien Bereich des Unterkiefers oder Oberkiefers gegenüberliegt, abgetastet und der die Raumform der Zahnprothese (8) beschreibende Datensatz (8) unter Berücksichtigung der Relativlage des gegenüborliegenden Kiefers ermittelt wird.

5. Verfahren nach Anspruch 4, **dadurch gekennzeichnet, dass** die Relativlage des gegenüberliegenden Kiefers in verschiedenen Stellungen der Kiefer zueinander abgetastst

6. Verfahren nach Anspruch 4 oder 5, **dadurch gekennzeichnet, dass** der die Raumform der Zahnprothese (8) beschreibende Datensatz (6) unter Berücksichtigung einer Okklusionsebene und/oder einer Okklusionrichtung zwlschen den etnander gegenübsrliegenden Kiefern ermittelt wird.

7. Verfahren nach einem der Ansprüche 1 bis 6, **dadurch gekennzeichnet, dass** die Schleimhautstruktur In dem zahntreien Bereich des Unterklefers oder Oberklefers in verschledenen Mundsituationen abgetastet wind, um den die Raumform der Schleimhautstruktur beschreibenden Datensatz (2) zu ermittein.

8. Verfahren nach einen der Ansprüche 1 bis 7, **dadurch gekennzeichnet, dass** der die Raumform der Zahnprothese (8) beschreibende Datensatz (6) zusammen mit den durch Abtasten ermittelten Datensätzen (2) in einer dreidimensionalen Darstellung visualislert wird, bevor die Maschine (7) angesteuert wird.

9. Verfahren nach Anspruch 8, **dadurch gekennzeichnet, dass** der die Raumform der Zahnprothese (8) beschreibende Datensatz (8) durch an der dreidimensionalen Darstellung angreifende grafische Werkzeuge veränderbar ist.

10. Verwendung eines Kunststoffvorformlings (11), der einen Bereich (12) aus einer ersten und einen daran angrenzenden Bereich (13) aus einer zweiten Farbe aufweist, bei der Herstellung von Zahnersatz nach einem der Ansprüche 1 bis 9, wobei der Schleimhautbereich (9) einer Zahnprothese aus dem Bereich (12) des Kunststoffvorformlings (11) aus der ersten und deren Zahnbereich (10) aus dem Bereich (13) den Kunststoffvorformlings (11) aus der zweiten Farbe ausgebildet Wird.

11. Vorrichtung zur Herstellung von Zahnersatz mit:
- einer mechanischen und/oder optischen Abtasteinrichtung (1) zum Abtasten einer Schleimhautstruktur in einem zahnfreien Bereich eines Unterkiefers oder Oberkiefers, die einen die Raumform der Schleimhautstruktur beschreibenden Datensatz ermittelt,
- einem Rechner (3) zum Ermitteln eines die Raumform einer herausnehmbaren Zahnprothese (8) beschreibenden Datensatzes (6) aufgrund eines den die Raumform der Schleimhautstruktur beschreibenden Datensatz verarbeitenden Programmes, wobei die Raumform der Zahnprothese (8) einen zu der Raumform der Schleimhautstruktur komplementären Schlelmhautbereich (9) und einen daran angrenzenden Zahnbereich (10) aufweist, und
- einer Maschine (7), die von dem Rechner mit dem die Raumform der Zahnprothese beschreibenden Datensatz (6) zum Material abnehmenden Herausarbeiten der Raumform der Zahnprothese (8) aus einen Kunststoffvorformling (11) angesteuert wird, wobei der Kunststoffvorformling (11) einen Bereich (12) aus einer ersten und einen daran angrenzenden Bereich (13) aus einer zweiten Farbe aufweist, wobei der Schlelmhautbereich (9) der Raumform der Zahnprothese in dem Bereich (12) des Kunststoffvorformlings (11) aus der ersten und deren Zahnberelch (10) in dem Bereich (13) des Kunststoffvorformlings (11) aus der zweiten Farbe ausgebildet wird.

12. Vorrichtung nach Anspruch 11, **dadurch gekennzeichnet, dass** ein Bildschirm (4) an den Rechner (3) angeschlossen ist, auf dem der Rechner (3) den die Raumform der Zahnprothese (8) beschreibende Datensatz (6) zusammen mit den durch Abtasten ermittelten Datensätzen (2) in einer dreldlmenslonalen Darstellung visualisiert, bevor er die Maschine (7) ansteuert.

13. Vorrichtung nach Anspruch 12, **dadurch gekennzeichnet, dass** Eingabeeinrichtungen vorhanden sind, um den die Raumform der Zahnprothese (8) beschreibenden Datensatz (6) durch an der dreidimensionalen Darstellung angreifende grafische Werkzeuge zu verändern.

14. Verfahren zur Herstellung von Epithetik mit den Schritten:
- mechanisches und/oder optisches Abtasten einer Oberflächenetruktur in einem Bereich eines Kopfs, um einen die Raumform der Obedlächenstruktur beschreibenden Datensatz zu ermitteln,
- Ermitteln eines die Raumform einer Epithese oder eines Obturators beschreibenden Datensatzes, wobei die Raumform der Epithese oder des Obturators einen zu der Raumform der Oberflächenstruktur komplementären Anlagebereich und diesem abgekehrte angrenzende Bereiche aufweist, und
- Ansteuern einer Maschine mit dem die Raumform der Epithese oder des Obturators beschreibenden Datensatz zum Material abnehmenden Herausarbeiten der Raumform der Epithese oder des Obturators aus einem Kunststoffvorformling, der einen Bereich aus einem ersten und einen daran angrenzenden Bereich aus einer zweiten Material aufweist, wobei sich die Verformbarkeit und/oder die Farbe des ersten und des zweiten Materials voneinander unterscheiden.

15. Vorrichtung zur Hemtellung von Epithetik mit:
- einer mechanischen und/oder optischen Abtasteinrichtung zum Abtasten einer Oberflächenstruktur in einem Bereich eines Kopfs, die einen die Raumform der Oberflächenstruktur beschreibenden Datensatz ermittelt,
- einem Rechner zum Ermitteln eines die Raumform einer Epithese oder eines Obturators beschrelbenden Datensatzes aufgrund eines den die Raumform der Oberflächenstruktur beschreibenden Datensatz verarbeitenden Programms, wobei die Raumform der Epithese oder des Obturators einen zu der Raumform der Oberflächenstruktur komplementären Anlagebereich und diesem abgekehrte angrenzende Bereiche aufweist, und
- einer Maschine, die von dem Rechner mit dem die Raumform der Epithese oder des Obturators beschreibenden Datensatz zum Material abnehmenden Herausarbeiten der Raumform der Epithese oder des Obturators aus einem Kunststoffvorformling angesteuert wird, wobei der Kunststoffvorformling einen Bereich aus einem ersten und einen daran angrenzenden Bereich aus einer zweiten Material aufweist, wobei sich die Verformbarkeit und/oder die Farbe des ersten und des zweiten Materials voneinander unterschelden.

## Claims

1. A method of manufacturing dental prostheses comprising the steps of:
- mechanically and/or optically scanning a mucosa structure in a tooth-free area of a lower or upper jaw to determine a set of data (2) describing the shape of the mucosa structure,
- determining a set of data (6) describing the shape of a removable dental prosthesis (8), the shape of the dental prosthesis (8) comprising a mucosa area (6) being complementary to the shape of the mucosa structure and an adjacent teeth area (10); and
- operating a machine (7) based on the set of data (6) describing the shape of the dental prosthesis for working the shape of the dental prosthesis (8) out of a plastic preform (11), which has an area (12) of a first and an adjacent area (13) of a second colour by removing material, the mucosa area (9) of the shape of the dental prosthesis being formed in the area (12) of the plastic preform (11) of the first colour, and its teeth area (10) being formed in the area (13) of the plastic preform (11) of the second colour.

2. The method of claim 1, **characterized in that**, additionally, the shape of teeth of the lower or upper jaw adjacent to the tooth-free area is scanned, and that the set of data (6) describing the shape of the dental prosthesis (8) is determined under consideration of the shape of the adjacent teeth.

3. The method of claim 1 or 2, **characterized in that**, additionally, the shape of an area of a jaw which opposes the tooth-free area of the lower or upper jaw is scanned, and that the set of data (6) describing the shape of the dental prosthesis (8) is determined under consideration of the shape of the area of the opposing jaw.

4. The method of any of the claims 1 to 3, **characterized in that**, additionally, a relative position of a jaw which opposes the tooth-free area of the lower or upper jaw is scanned and the set of data (6) describing the shape of the dental prosthesis (8) is determined under consideration of the relative position of the opposing jaw.

5. The method of claim 4, **characterized in that** the relative position of the opposing jaw is scanned in various positions of the jaws with regard to each other.

6. The method of claim 4 or 5, **characterized in that** the set of data (6) describing the shape of the dental prosthesis (8) is determined under consideration of an occlusion plane and/or an occlusion direction between the jaws opposing each other.

7. The method of any of the claims 1 to 6, **characterized in that** the mucosa structure in the tooth-free area of the lower or upper jaw is scanned in various oral situations to determine the set of data (2) describing the shape of the mucosa structure.

8. The method of any of the claims 1 to 7, **characterized in that**, prior to controlling the machine (7), the set of data (6) describing the shape of the dental prosthesis (8) is visualized together with the sets of data (2) determined by scanning in a three-dimensional visualisation.

9. The method of claim 8, **characterized in that** the set of data (6) describing the shape of the dental prosthesis (8) is amendable by graphic tools engaging the three-dimensional visualisation.

10. A use of a plastic preform (11) having an area (12) of a first colour and an adjacent area (13) of a second colour in manufacturing dental prostheses according to any of the claims 1 to 6, wherein the mucosa area (9) of a dental prosthesis is formed of the area (12) of the plastic preform (11) of the first colour, and the teeth area (10) is formed of the area (13) of the plastic preform (11) of the second colour.

11. An apparatus for manufacturing dental prostheses comprising:
- a mechanical and/or optically scanning device (1) for scanning a mucosa structure in a tooth-free area of a lower or upper jaw, which determines a set of data describing the shape of the mucosa structure,
- a computer (3) for determining a set of data (6) describing the shape of a removable dental prosthesis (8) based on a program processing the set of data describing the shape of the mucosa structure, the shape of the dental prosthesis (8) comprising a mucosa area (9) which is complementary to the shape of the mucosa structure and an adjacent teeth area (10), and
- a machine (7) which is controlled by the computer based on the set of data (6) describing the shape of the dental prosthesis for working the shape of the dental prosthesis (8) out of a plastic preform (11) by removing material, the plastic preform (11) having an area (12) of a first colour and an adjacent area (13) of a second colour, the mucosa area (9) of the shape of the dental prosthesis being formed in the area (12) of the plastic preform (11) of the first colour, and its teeth area (10) being formed in the area (13) of the plastic preform (11) of the second colour.

12. The apparatus of claim 11, **characterized in that** a monitor (4) is connected to the computer (3), on which the computer (3), before it controls the machine (7), visualizes the set of data (6) describing the shape of the dental prosthesis (8) together with the sets of data (2) determined by scanning in a three-dimensional visualization.

13. The device of claim 12, **characterized in that** an input device is provided for changing the set of data (6) describing the shape of the dental prosthesis (8) by graphic tools engaging the three-dimensional visualization.

14. Method of manufacturing epitheses comprising the steps of:
- mechanically and/or optically scanning a surface structure in the area of a head, to determine a set of data describing the shape of the surface structure,
- determining a set of data describing the shape of an epithesis or of an obturator, the shape of the epithesis or of the obturator comprising an attachment area being complementary to the shape of the surface structure and adjacent areas facing in a opposite direction, and
- controlling a machine based on the set of data describing the shape of the epithesis or of the obturator for working the shape of the epithesis or of the obturator out of a plastic preform by removing material, the plastic preform having an area of a first and an adjacent area of a second material, the deformability and/or the colour of the first and the second material differing form each other.

15. An apparatus for manufacturing epitheses comprising:
- a mechanic and/or optical scanning device for scanning a surface structure in an area of a head, which determines a set of data describing the shape of the surface structure,
- a computer for determining a set of data describing the shape of an epithesis or of an obturator based on a program processing the set of data describing the shape of the surface structure, the shape of the epithesis or of the obturator comprising an attachment area being complementary to the shape of the surface structure and adjacent areas facing in an opposite direction, and
- a machine which is controlled by the computer based on the set of data describing the shape of the epithesis or of the obturator for working the shape of the epithesis or of the obturator out of a plastic preform by removing material, the plastic preform having an area of a first and an adjacent area of a second material, the deformability and/or the colour of the first and the second material differing from each other.

## Revendications

1. Procédé de réalisation d'une prothèse dentaire, comportant les étapes :
- analyse mécanique et/ou optique d'une structure muqueuse dans une zone sans dent d'une mâchoire inférieure ou d'une mâchoire supérieure, pour déterminer un enregistrement de données (2) décrivant la forme tridimensionnelle de la structure muqueuse,
- détermination d'un enregistrement de données (6) décrivant la forme tridimensionnelle d'une prothèse dentaire (8) à usiner, la forme tridimensionnelle de la prothèse dentaire (8) comportant une zone de muqueuse (9), complémentaire de la forme tridimensionnelle de la structure muqueuse, et une zone de dent (10) adjacente à ladite zone de muqueuse, et
- commande d'une machine (7) avec l'enregistrement de données (6), décrivant la forme tridimensionnelle de la prothèse dentaire, pour l'usinage par enlèvement de matière de la forme tridimensionnelle de la prothèse dentaire (8) dans une préforme en matière plastique (11), qui comporte une zone (12) dans une première couleur et une zone (13), adjacente à celle-ci, dans une deuxième couleur, sachant que la zone de muqueuse (9) de la forme tridimensionnelle de la prothèse dentaire est réalisée dans la zone (12) de la préforme en matière plastique (11) dans la première couleur, et la zone de dent (10) de ladite prothèse dentaire est réalisée dans la zone (13) de la préforme en matière plastique (11) dans la deuxième couleur.

2. Procédé selon la revendication 1, **caractérisé en ce que**, en plus, la forme tridimensionnelle des dents adjacentes à la zone sans dent de la mâchoire inférieure ou de la mâchoire supérieure est analysée et l'enregistrement de données (6), décrivant la forme tridimensionnelle de la prothèse dentaire (8), est déterminé en tenant compte de la forme tridimensionnelle des dents adjacentes.

3. Procédé selon la revendication 1 ou 2, **caractérisé en ce que**, en plus, la forme tridimensionnelle d'une zone d'une mâchoire, qui est située en regard de la zone sans dent de la mâchoire inférieure ou de la mâchoire supérieure, est analysée et l'enregistrement de données (6), décrivant la forme tridimensionnelle de la prothèse dentaire (8), est déterminé en tenant compte de la forme tridimensionnelle de la zone de la mâchoire située en face.

4. Procédé selon l'une quelconque des revendications 1 à 3, **caractérisé en ce que**, en plus, une position relative d'une mâchoire, qui est située en regard de la zone sans dent de la mâchoire inférieure ou de la mâchoire supérieure, est analysée et l'enregistrement de données (6), décrivant la forme tridimensionnelle de la prothèse dentaire (8), est déterminé en tenant compte de la position relative de la mâchoire située en face.

5. Procédé selon la revendication 4, **caractérisé en ce que** la position relative de la mâchoire située en face est analysée dans différentes positions des mâchoires l'une par rapport à l'autre.

6. Procédé selon la revendication 4 ou 5, **caractérisé en ce que** l'enregistrement de données (6), décrivant la forme tridimensionnelle de la prothèse dentaire (8), est déterminé en tenant compte d'un plan d'occlusion et/ou d'une direction d'occlusion entre les mâchoires situées l'une en regard de l'autre.

7. Procédé selon l'une quelconque des revendications 1 à 6, **caractérisé en ce que** la structure muqueuse dans la zone sans dent de la mâchoire inférieure ou de la mâchoire supérieure est analysée dans différentes situations de la bouche, afin de déterminer l'enregistrement de données (2) décrivant la forme tridimensionnelle de la structure muqueuse.

8. Procédé selon l'une quelconque des revendications 1 à 7, **caractérisé en ce que** l'enregistrement de données (6), décrivant la forme tridimensionnelle de la prothèse dentaire (8), est visualisé sur une représentation tridimensionnelle conjointement avec les enregistrements de données (2) déterminés par l'analyse, avant que la machine (7) soit actionnée.

9. Procédé selon la revendication 8, **caractérisé en ce que** l'enregistrement de données (6), décrivant la forme tridimensionnelle de la prothèse dentaire (8), peut être modifiée par des outils graphiques agissant sur la représentation tridimensionnelle.

10. Utilisation d'une préforme en matière plastique (11), qui comporte une zone (12) dans une première couleur et une zone (13), adjacente à celle-ci, dans une deuxième couleur, lors de la réalisation d'une prothèse dentaire selon l'une quelconque des revendications 1 à 9, sachant que la zone de muqueuse (9) d'une prothèse dentaire est réalisée dans la zone (12) de la préforme en matière plastique (11) dans la première couleur, et la zone de dent (10) de ladite prothèse dentaire est réalisée dans la zone (13) de la préforme en matière plastique (11) dans la deuxième couleur.

11. Dispositif pour la réalisation d'une prothèse dentaire, comportant :
- un dispositif d'analyse (1) mécanique et/ou optique, qui est destiné à analyser une structure muqueuse dans une zone sans dent d'une mâchoire inférieure ou d'une mâchoire supérieure et qui détermine un enregistrement de données décrivant la forme tridimensionnelle de la structure muqueuse,
- un ordinateur (3) pour déterminer un enregistrement de données (6), décrivant la forme tridimensionnelle de la prothèse dentaire (8) à usiner, sur la base d'un programme de traitement de l'enregistrement de données décrivant la forme tridimensionnelle de la structure muqueuse, la forme tridimensionnelle de la prothèse dentaire (8) comportant une zone de muqueuse (9), complémentaire de la forme tridimensionnelle de la structure muqueuse, et une zone de dent (10) adjacente à ladite zone de muqueuse, et
- une machine (7), qui est commandée par l'ordinateur avec l'enregistrement de données (6), décrivant la forme tridimensionnelle de la prothèse dentaire, pour l'usinage par enlèvement de matière de la forme tridimensionnelle de la prothèse dentaire (8) dans une préforme en matière plastique (11), sachant que la préforme en matière plastique (11) comporte une zone (12) dans une première couleur et une zone (13), adjacente à celle-ci, dans une deuxième couleur, sachant que la zone de muqueuse (9) de la forme tridimensionnelle de la prothèse dentaire est réalisée dans la zone (12) de la préforme en matière plastique (11) dans la première couleur, et la zone de dent (10) de ladite prothèse dentaire est réalisée dans la zone (13) de la préforme en matière plastique (11) dans la deuxième couleur.

12. Dispositif selon la revendication 11, **caractérisé en ce qu'**à l'ordinateur (3) est raccordé un écran (4), sur lequel l'ordinateur (3) visualise sur une représentation tridimensionnelle l'enregistrement de données (6), décrivant la forme tridimensionnelle de la prothèse dentaire (8) conjointement avec les enregistrements de données (2) déterminés par l'analyse, avant qu'il n'actionne la machine (7).

13. Dispositif selon la revendication 12, **caractérisé en ce qu'**il est prévu des dispositifs d'entrée, pour modifier l'enregistrement de données (6), décrivant la forme tridimensionnelle de la prothèse dentaire (8), par des outils graphiques agissant sur la représentation tridimensionnelle.

14. Procédé de réalisation d'une épithèse, comportant les étapes :
- analyse mécanique et/ou optique d'une structure de surface dans une zone d'une tête, pour déterminer un enregistrement de données décrivant la forme tridimensionnelle de la structure de surface,
- détermination d'un enregistrement de données décrivant la forme tridimensionnelle d'une épithèse ou d'un obturateur, la forme tridimensionnelle de l'épithèse ou de l'obturateur comportant une zone d'appui complémentaire de la forme tridimensionnelle de la structure de surface et des zones adjacentes détournées de celle-ci, et
- commande d'une machine avec l'enregistrement de données, décrivant la forme tridimensionnelle de l'épithèse ou de l'obturateur, pour l'usinage par enlèvement de matière de la forme tridimensionnelle de l'épithèse ou de l'obturateur dans une préforme en matière plastique, qui comporte une zone dans une première couleur et une zone, adjacente à celle-ci, dans une deuxième couleur, sachant que la possibilité de formage et/ou la couleur du premier matériau et du deuxième matériau sont différentes l'une de l'autre.

15. Dispositif de réalisation d'une épithèse, comportant :
- un dispositif d'analyse mécanique et/ou optique, qui est destiné à analyser une structure de surface dans une zone d'une tête et qui détermine un enregistrement de données décrivant la forme tridimensionnelle de la structure de surface,
- un ordinateur pour déterminer un enregistrement de données, décrivant la forme tridimensionnelle d'une épithèse ou d'un obturateur, sur la base d'un programme de traitement de l'enregistrement de données décrivant la forme tridimensionnelle de la structure de surface, la forme tridimensionnelle de l'épithèse ou de l'obturateur comportant une zone d'appui complémentaire de la forme tridimensionnelle de la structure de surface et des zones adjacentes détournées de celle-ci, et
- une machine, qui est commandée par l'ordinateur avec l'enregistrement de données, décrivant la forme tridimensionnelle de l'épithèse ou de l'obturateur, pour l'usinage par enlèvement de matière de la forme tridimensionnelle de l'épithèse ou de l'obturateur dans une préforme en matière plastique, sachant que la préforme en matière plastique comporte une zone dans une première couleur et une zone, adjacente à celle-ci, dans une deuxième couleur, sachant que la possibilité de formage et/ou la couleur du premier matériau et du deuxième matériau sont différentes l'une de l'autre.
